# EUROPEAN PATENT APPLICATION

(11) **EP 4 563 518 A1**
(43) Date of publication of application: **04.06.2025**
(21) Application number: 24844714.6
(22) Date of filing: 19.07.2024
(51) Int. Cl.: B66F 9/075, B62D 63/04

(54) **CANTILEVER AGV**

(30) Priority: 21.07.2023 CN 202310905134
(71) Applicant: Hangzhou Hikrobot Co., Ltd., Hangzhou, Zhejiang 310051 (CN)
(72) Inventor: ZHANG, Chi, Hangzhou, Zhejiang 310051 (CN); WANG, Hui, Hangzhou, Zhejiang 310051 (CN); ZHANG, Lingkai, Hangzhou, Zhejiang 310051 (CN); BAI, Han, Hangzhou, Zhejiang 310051 (CN); WANG, Yong, Hangzhou, Zhejiang 310051 (CN); ZHAO, Yan, Hangzhou, Zhejiang 310051 (CN)
(74) Representative: Yang, Shu
(86) International application number: PCT/CN2024/106375
(87) International publication number: WO 2025/021022

(57) **Abstract**

A cantilever AGV, relating to the technical field of AGVs and used for changing an included angle between a cantilever shaft (30) and a plane where an AGV chassis (10) is located. The cantilever AGV comprises an AGV chassis (10), an adjusting plate (20), a cantilever shaft (30), and a first driving assembly (40). The adjusting plate (20) is located above the AGV chassis (10) and is arranged on the AGV chassis (10); and the adjusting plate (20) can rotate around a first axis. The cantilever shaft (30) is located above the AGV chassis (10); the adjusting plate (20) is located on one side of the cantilever shaft (30) in the axial direction of the cantilever shaft (30); and the side of the cantilever shaft (30) close to the adjusting plate (20) is fixedly connected to the adjusting plate (20). The first driving assembly (40) is located above the AGV chassis (10) and located on the side of the adjusting plate (20) distant from the cantilever shaft (30); and the first driving assembly (40) is arranged on the AGV chassis (10) and is configured to drive the adjusting plate (20) to rotate around the first axis so as to adjust the included angle between the cantilever shaft (30) and the horizontal plane. The cantilever AGV is used for transporting roll materials.

## Description

The present application claims the priority to a Chinese patent application No. 202310905134.7 filed with the China National Intellectual Property Administration on July 21, 2023 and entitled "AGV cantilever vehicle", which is incorporated herein by reference in its entirety.

### Technical Field

The present application relates to the technical field of AGV, particularly to an AGV cantilever vehicle.

### Background

An automated guided vehicle (AGV) is equipped with an automatic navigation device such as an electromagnetic or optical automatic navigation device, which can travel along a specified navigation path, and has safety protection and various transfer functions. In general, a travel path of the automatic guided vehicle can be controlled through an electromagnetic path-Following system.

In related arts, the automated guided vehicle includes an AGV cantilever vehicle, the AGV cantilever vehicle includes an AGV chassis vehicle and a cantilever shaft arranged on the AGV chassis vehicle. The cantilever shaft is used to transfer coil materials from a buffer table to a coil material table. However, during the transfer process, the coil materials may cause an axis of the cantilever shaft to be non-parallel to an axis of a rotating shaft on the coil material table, resulting in a misalignment between the cantilever shaft and the coil material table, thus the coil material cannot be moved onto the coil material table.

### Summary

The objective of embodiments of the present application is to provide an AGV cantilever vehicle for changing an angle between an axis of a cantilever shaft and a horizontal plane.

To achieve the above objective, the embodiments of the present application provide the following technical solutions.

An embodiment of the present application provides an AGV cantilever vehicle. The AGV cantilever vehicle includes an AGV chassis vehicle, an adjusting plate, a cantilever shaft, and a first driving component. The adjusting plate is located above the AGV chassis vehicle and is arranged on the AGV chassis vehicle. The adjusting plate can rotate around a first axis. The cantilever shaft is located above the AGV chassis vehicle, and the adjusting plate is located on one axial side of the cantilever shaft along an axial direction of the cantilever shaft. One side of the cantilever shaft close to the cantilever shaft is fixedly connected to the adjusting plate. The first driving component is located above the AGV chassis vehicle and on one side of the adjusting plate away from the cantilever shaft. The first driving component is arranged on the AGV chassis vehicle and configured to drive the adjusting plate to rotate around a first axis to adjust an angle between the cantilever shaft and a horizontal plane.

The AGV cantilever vehicle provided by the embodiment of the present application includes a cantilever shaft, an adjusting plate, a first fixed plate, and a first driving component. The first driving component drives the adjusting plate to rotate around the first axis, and the adjusting plate drives the cantilever shaft to rotate around the first axis to change the angle between the axis of the cantilever shaft and the horizontal plane. In this way, the axis of the cantilever shaft can be made parallel to the axis of the rotating shaft on the coil material table, in other words, the cantilever shaft and the rotating shaft on the coil material table can be aligned, and the coil material on the cantilever shaft can be moved onto the coil material table.

In some embodiments, the AGV cantilever vehicle further includes a first connecting rod located between the adjusting plate and the first driving component, with one end of the first connecting rod hinged to the adjusting plate and the other end of the first connecting rod hinged to the first driving component. The first driving component is fixedly connected to the AGV chassis vehicle.

In some embodiments, the AGV cantilever vehicle further includes a horizontal sensor fixedly mounted on the cantilever shaft and electrically connected to the first driving component, the horizontal sensor is configured to measure the angle between the axis of the cantilever shaft and the horizontal plane. Wherein the first driving component drives the adjusting plate to rotate around the first axis based on the angle measured by the horizontal sensor.

In some embodiments, the AGV cantilever vehicle further includes two support pillars and a first fixed plate. The two support pillars are located above the AGV chassis vehicle and located on the side of the adjusting plate away from the cantilever shaft. The support pillars extend vertically and are fixedly connected to the AGV chassis vehicle. The two support pillars are respectively arranged on opposite sides of the AGV chassis vehicle along an extension direction of the first axis. The first fixed plate is located between the two support pillars and the adjusting plate, and the first fixed plate is arranged on the support pillars. The first fixed plate is hinged to the adjusting plate, so that the adjusting plate rotated around the first axis; the first driving component is arranged on the first fixed plate.

In some embodiments, the cantilever shaft is provided with a first through-hole and a second through-hole, wherein the first through-hole penetrates the cantilever shaft along the axial direction of the cantilever shaft, and the second through-hole penetrates the cantilever shaft along a first direction; the first direction intersects with the axis of the cantilever shaft. The AGV cantilever vehicle further includes a first tension block, a second tension block, and a second driving component. The first tension block is partially located within the first through-hole and partially located within the second through-hole, and can slide along the first direction. The second tension block is located within the first through-hole and can slide along the axial direction of the cantilever shaft. The second tension block includes a side wall, there is an angle between the side wall and the axis of the cantilever shaft. The side wall abuts against the first tension block to drive the second tension block to slide along the first direction, so that the first tension block partially extends beyond an outer circumferential surface of the cantilever shaft. The second driving component is partially located within the first through-hole and is fixedly mounted on the cantilever shaft, and the second driving component is configured to drive the second tension block to slide along the axial direction of the cantilever shaft.

In some embodiments of the present application, the AGV cantilever vehicle further includes two tension sliders, a tension guide rail, and a fixed strip;
the two tension sliders are spaced apart along the axial direction of the cantilever shaft and fixedly connected to an inner wall of the cantilever shaft;
the tension guide rail is located within the first through-hole and extends along the axial direction of the cantilever shaft, the tension guide rail is slidably connected to the tension slider.

In some embodiments, the first tension block includes a first sub part and a second sub part. The first sub part is at least partially located within the first through-hole. The second sub part is located within the first through-hole and is connected to one end of the first sub part along the first direction. Along the first direction, a size of at least a portion of the second sub part is larger than a size of the first sub part. The AGV cantilever vehicle further includes an elastic member located within the first through-hole, with one end of the elastic member connected to the second sub part and the other end of the elastic member connected to the cantilever shaft, and the elastic member is capable of generating a force that causes the first tension block to move towards the axis of the cantilever shaft.

In some embodiments of the present application, the first tension block further includes a third sub part located on one side of the first sub part away from the second sub part and connected to the first sub part;
the AGV cantilever vehicle further includes a linear bearing installed within the second through-hole;
one end of the elastic member abuts against one end of the second sub part close to the first sub part, and the other end of the elastic member abuts against the linear bearing.

In some embodiments, the AGV cantilever vehicle further includes a moving member, two clamping jaws, and a first driving mechanism. The moving member surrounds a portion of the cantilever shaft and is slidably connected to the cantilever shaft. The two clamping jaws are located on one side of the moving member away from the adjusting plate; the two clamping jaws are respectively arranged on both sides of the cantilever shaft and connected to the moving member respectively, so that the clamping jaws can rotate in a direction away from or towards the cantilever shaft. The first driving mechanism is arranged on a surface of the moving member away from the adjusting plate, and is configured to drive the clamping jaws to rotate in the direction away from or towards the cantilever shaft.

**In** some embodiments of the present application, the moving member includes:
a moving rack, two moving gears, a moving motor, a moving guide rail, and a moving slider;
the moving rack extends along the axial direction of the cantilever shaft and is installed on an outer circumferential surface of the cantilever shaft;
one of the two moving gears is installed in mesh with the moving rack, and the moving motor is installed on the moving member and fixedly connected to the other one of the two moving gears;
the moving guide rail extends along the axial direction of the cantilever shaft and is fixedly mounted on the outer circumferential surface of the cantilever shaft, and the moving guide rail is partially located between the moving member and the cantilever shaft;
the moving slider is slidably installed with the moving guide rail and is fixedly connected to the moving member.

In some embodiments, the first driving mechanism includes a fixed block, a slider, two second connecting rods, and a third driving component. The fixed block includes a guide rail part and a fixed part; the guide rail part is located on the surface of the moving member away from the adjusting plate, and extends radially along the cantilever shaft; the fixed part is arranged on a surface of the guide rail part close to the cantilever shaft, and is located between the two clamping jaws, the fixed part is hinged to the clamping jaws so that the clamping jaws can rotate in the direction away from or towards the cantilever shaft. The slider is slidably connected to the guide rail part; the two second connecting rods are respectively arranged on both sides of the fixed block along a direction perpendicular to an extension of the guide rail part; one end of each second connecting rod is hinged to the slider, and the other end of the second connecting rod is hinged to a clamping jaw located on a same side of the fixed block. The third driving component is arranged on the moving member and configured to drive the slider to slide radially along the cantilever shaft.

In some embodiments of the present application, the third driving component includes a clamping rack, a clamping gear, a clamping motor, and an electric cylinder;
an extension direction of the clamping rack is the same as that of the guide rail part, and the clamping rack is fixedly connected to the slider;
the clamping gear is installed in mesh with the clamping rack;
the clamping motor is installed on the moving member and fixedly connected to the clamping gear;
the electric cylinder is installed on the moving member and fixedly connected to the slider.

In some embodiments, the AGV cantilever vehicle further includes a material pushing block fixedly mounted on the clamping jaw, with one end of the material pushing block away from the clamping jaw being farthest from the moving member. Wherein, a material of the material pushing block includes an elastic material.

In some embodiments, the AGV cantilever vehicle further includes a material retaining plate located on the side of the cantilever shaft away from the adjusting plate, the material retaining plate rotates around a second axis to extend beyond or retract into an outer circumferential surface of the cantilever shaft. Wherein, the second axis is parallel to and spaced apart from an axis of the cantilever shaft.

In some embodiments of the present application, the AGV cantilever vehicle further includes a material retaining motor and optical sensors;
the material retaining motor is located within the first through-hole and fixedly mounted on the cantilever shaft; the material retaining motor is used to drive the material retaining plate to rotate along the second axis;
the optical sensor is connected to the material retaining motor for detecting a position of the material retaining plate, and there are two optical sensors.

In some embodiments of the present application, the AGV cantilever vehicle further includes multiple roller bearings;
the multiple roller bearings are installed on an outer wall of the cantilever shaft, and partially protrude from the outer wall of the cantilever shaft, with axes of the roller bearings being perpendicular to the axis of the cantilever shaft;
the multiple roller bearings are spaced apart along the axial direction of the cantilever shaft and evenly distributed circumferentially around the cantilever shaft.

### Brief Description of the Drawings

The accompanying drawings described here are intended to provide a further understanding of the present application and constitute a part of the same. The illustrative embodiments of the present application and their explanations are used to explain the present application and do not constitute an improper limitation of the present application.

In order to more clearly describe the technical solutions the present application, accompanying drawings that need to be used in some embodiments of the present application will be briefly described below. Obviously, the accompanying drawings described below are for only some of the embodiments of the present application. For those skilled in the art, they may also obtain other drawings based on these accompanying drawings. In addition, the accompanying drawings in the following description can be regarded as schematic diagrams and are not limitations on an actual size of a product, an actual process of a method, an actual timing of a signal, etc. involved in the embodiments of the present application.
Figure 1 is a structural diagram of an AGV cantilever vehicle from one perspective, according to some embodiments;
Figure 2 is a structural diagram of the AGV cantilever vehicle from another perspective, according to some embodiments;
Figure 3 is a structural diagram of a cantilever shaft, an adjusting plate, and a first fixed plate according to some embodiments;
Figure 4 is a structural diagram of the adjusting plate and support pillars according to some embodiments;
Figure 5 is a structural diagram of the cantilever shaft according to some embodiments;
Figure 6 is a cross-sectional structural diagram of the cantilever shaft according to some embodiments;
Figure 7 is a partially enlarged view of section A in Figure 6;
Figure 8 is a structural diagram of a fixed strip and a second tension block according to some embodiments;
Figure 9 is a structural diagram of a moving member and the cantilever shaft according to some embodiments;
Figure 10 is a structural diagram of a clamping jaw according to some embodiments;
Figure 11 is a structural diagram of a material retaining plate according to some embodiments;
Figure 12 is a front view of a coil material according to some embodiments;
Figure 13 is a left view of a coil material according to some embodiments.

### Reference signs:

AGV cantilever vehicle 100, roller bearing 101, AGV chassis vehicle 10, linear bearing 12;
adjusting plate 20, adjusting plate hinged seat 21;
cantilever shaft 30, first through-hole 31, second through-hole 32, fixing flange 33;
first driving component 40, first connecting rod 50, first connecting rod hinge point 51;
support pillar 60, first fixed plate 70;
first tension block 80, first sub part 81, second sub part 82, third sub part 83;
second tension block 90, second tension block side wall 91;
second driving component 110, fixed strip 120, tension slider 121, tension guide rail 122;
moving member 130, moving rack 131, moving gear 132, moving motor 133, moving guide rail 134, moving slider 135;
clamping jaw 140;
first driving mechanism 150, fixed block 151, guide rail part 1511, fixed part 1512, slider 152, second connecting rod 153, third driving component 154, clamping rack 1541, clamping gear 1542, clamping motor 1543, second fixed plate 155;
material pushing block 160, material retaining plate 170, material retaining motor 180, first optical sensor 190, second optical sensor 191.

### Detailed Description

In order to make the objective, technical solutions, and advantages of the present invention clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

Unless otherwise required by the context, a term "including" shall be interpreted throughout the specification and claims as open and inclusive, meaning "including, but not limited to". In the description of the specification, terms "one embodiment", "some embodiments", "exemplary embodiments", "an example" or "some examples" are intended to indicate that specific features, structures, materials or characteristics related to the embodiment or example are included in the embodiments or examples of the present application. The schematic representation of the above terms does not necessarily refer to the same embodiment or example. In addition, the specific features, structures, materials, or characteristics described may be included in any appropriate manner in any one or more embodiments or examples.

Below, terms "first" and "second" are only used for descriptive purposes and cannot be understood as indicating or implying relative importance or implying the number of technical features indicated. Thus, features limited to "first" and "second" may explicitly or implicitly include one or more of these features. In the description of the embodiments of the present application, unless otherwise specified, the meaning of "multiple" refers to two or more.

When describing some embodiments, expressions such as "connection" and its derivatives may be used. The term "connection" should be broadly understood, for example, "connection" can be a fixed connection, a detachable connection, or a one-piece connection; it can be direct connection or indirect connection through an intermediate medium.

As used in this article, "parallel" and "vertical" include the described situations as well as situations that are similar to the described situations, and a range of the similar situations is within an acceptable deviation range, wherein the acceptable deviation range is determined by the skilled in the art considering a measurement being discussed and errors related to the measurement of a specific quantity (i.e., limitations of the measurement system). For example, "parallel" includes absolute parallelism and approximate parallelism, wherein an acceptable deviation range of the approximate parallelism can be within, such as 5° of deviation; "vertical" includes absolute vertical and approximate vertical, wherein an acceptable deviation range of the approximate vertical can also be within, such as 5° of deviation.

As used in this article, depending on the context, a term "if" is optionally interpreted as meaning "when..." or "while..." or "in response to determining" or "in response to detecting". Similarly, depending on the context, phrases "if it is determined..." or "if [stated condition or event] is detected" optionally interpreted as referring to "when determined..." or "in response to determining..." or "when [stated condition or event] is detected" or "in response to detecting [stated condition or event]".

The use of "applicable to" or "configured to" in this article implies an open and inclusive language, which does not exclude devices that are applicable or configured to perform additional tasks or steps.

In addition, the use of "based on" implies openness and inclusiveness, because processes, steps, calculations, or other actions that are "based on" one or more of the conditions or values described can, in practice, be grounded on additional conditions or values beyond those mentioned.

The orientational terms such as "above", "down", "left", "right" and so on described in some embodiments of the present application are described from the perspective shown in the drawings and should not be understood as limitations on some embodiments of the present application.

In the related art, an AGV cantilever vehicle includes an AGV chassis vehicle and a cantilever shaft. The cantilever shaft is located above the AGV chassis vehicle, and an axis of the cantilever shaft is parallel to a plane on which the AGV chassis vehicle is located. One end of the cantilever shaft is fixedly arranged on the AGV chassis vehicle. The AGV cantilever vehicle is used to transport coil materials between a buffer table and a coil material table. During the transportation of the coil material, the coil materials are usually located at one suspended end of the cantilever shaft. Under the action of the gravity of the coil materials, the cantilever shaft undergoes rigid deformation, and the suspended end of the cantilever shaft hangs down relative to the other end, which results in an angle between the axis of the cantilever shaft and the horizontal plane failing to meet requirements, that is, the axis of the cantilever shaft is not parallel to an axis of a rotating shaft in the coil material table, that is, the cantilever shaft and the coil material table cannot be aligned, and the coil materials on the cantilever shaft cannot be moved onto the coil material table.

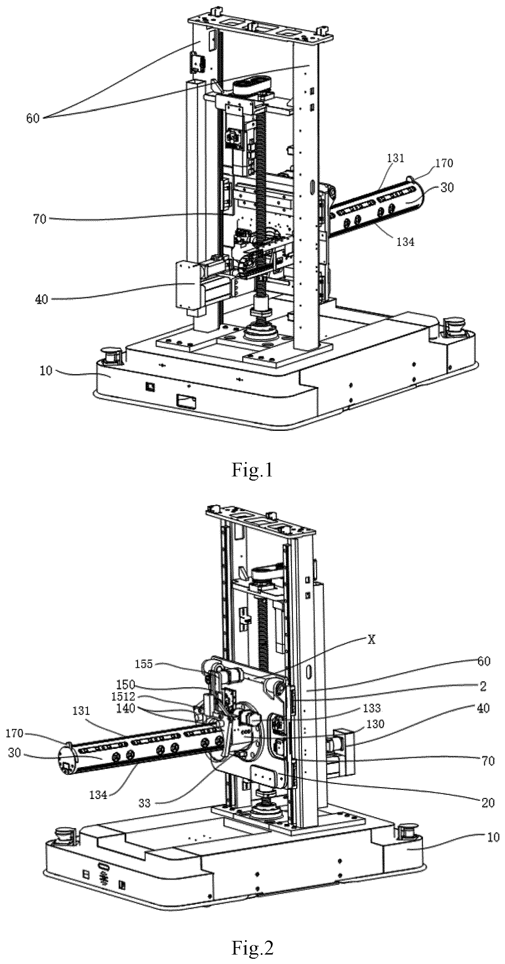

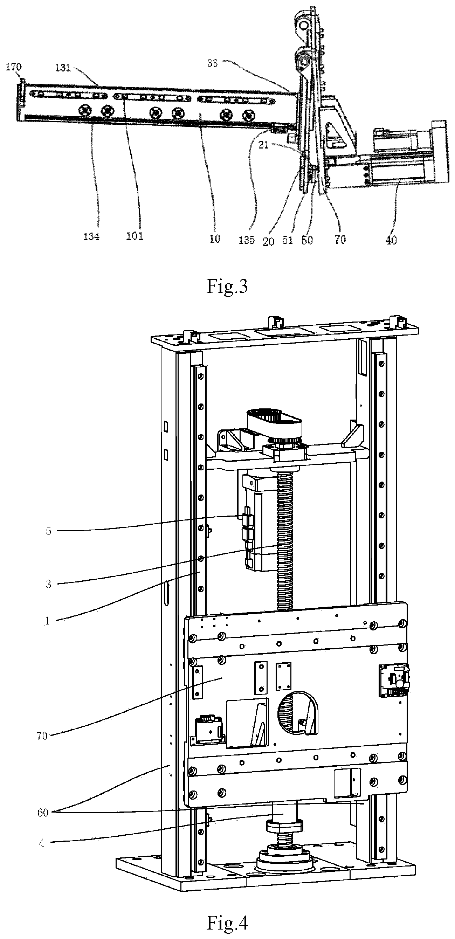

To solve the above technical problems, as shown in Figures 1, 2 and 3, Figure 1 is a structural diagram of an AGV cantilever vehicle from one perspective according to some embodiments, Figure 2 is a structural diagram of the AGV cantilever vehicle from another perspective according to some embodiments, and Figure 3 is a structural diagram of a cantilever shaft, an adjusting plate, and a first fixed plate according to some embodiments. The embodiments of the present application provide an AGV cantilever vehicle 100, which includes an AGV chassis vehicle 10, an adjusting plate 20, a cantilever shaft 30, and a first driving component 40.

The adjusting plate 20 is located above the AGV chassis vehicle 10 and arranged on the AGV chassis vehicle 10; the adjusting plate 20 can rotate around a first axis; the cantilever shaft 30 is located above the AGV chassis vehicle 100; the adjusting plate 20 is located on one side of the cantilever shaft 30 along an axial direction of the cantilever shaft 30, and one end of the cantilever shaft 30 close to the adjusting plate 20 is fixedly connected to the adjusting plate 20; the first driving component 40 is located above the AGV chassis vehicle 100 and located on one side of the adjusting plate 20 away from the cantilever shaft; the first driving component 40 is arranged on the AGV chassis vehicle 10 and configured to drive the adjusting plate 20 to rotate around the first axis, so as to adjust an angle between the cantilever shaft 30 and a horizontal plane.

Using the AGV cantilever vehicle 100 provided by the embodiments of the present application, the first driving component 40 drives the adjusting plate 20 to rotate around the first axis, and the adjusting plate 20 drives the cantilever shaft 30 to rotate around the first axis to change the angle between the axis of the cantilever shaft 30 and the horizontal plane. In this way, the axis of the cantilever shaft 30 can be parallel to the axis of the rotating shaft on the coil material table, in other words, the cantilever shaft 30 and the rotating shaft on the coil material table can be aligned, and the coil materials on the cantilever shaft 30 can be moved onto the coil material table.

Specifically, the AGV chassis vehicle 10 is equipped with an automatic navigation device such as an electromagnetic or optical automatic navigation device, which can travel along a specified navigation path, so that the AGV cantilever vehicle 100 can travel between the buffer table and the coil material table to move the coil materials located at the buffer table onto the coil material table.

The adjusting plate 20 is located above the AGV chassis vehicle 10 and arranged on the AGV chassis vehicle 10. The adjusting plate 20 can rotate around the first axis.

It can be understood that the term "arrange" in this article should be broadly understood.. It can refer to a direct arranging, where no other components (or regions, layers, or parts) between two components (or regions, layers, or parts), or it can involve arranging through an intermediate medium, where other components (or regions, layers, or parts) exist between two components (or regions, layers, or parts). For example, in the following text, the adjusting plate 20 is arranged on the AGV chassis vehicle through two support pillars 60.

The cantilever shaft 30 is located above the AGV chassis vehicle 10, the adjusting plate 20 is located on one side of the cantilever shaft 30 along an axial direction of the cantilever shaft 30, and the adjusting plate 20 can be located on a left or right side of the cantilever shaft 30. For example, as shown in Figure 3, the adjusting plate 20 is located on the left side of the cantilever shaft 30. One end of the cantilever shaft 30 close to the adjusting plate 20 is fixedly connected to the adjusting plate 20.

In this case, the adjusting plate 20 can drive the cantilever shaft 30 to rotate around the first axis, in order to adjust the angle between the axis of the cantilever shaft 30 and the horizontal plane, so that the angle between the axis of the cantilever shaft 30 and the horizontal plane meets the requirements, that is, the axis of the cantilever shaft 30 and the axis of the rotating shaft on the coil material table are aligned.

Exemplarily, the angle between the axis of the cantilever shaft 30 and the horizontal plane can be adjusted as 0°, that is, the axis of the cantilever shaft 30 is parallel to the horizontal plane. At this point, the axis of the cantilever shaft 30 and the axis of the rotating shaft on the coil material table are aligned.

Exemplarily, the first axis is perpendicular to the axis of the cantilever shaft 30.

Exemplarily, the horizontal plane may be a plane on which the AGV chassis vehicle 10 is located.

The cantilever shaft 30 may include a solid shaft or a hollow shaft, and the embodiments of the present application do not specifically limit this. For example, the cantilever shaft 30 includes the hollow shaft, which can reduce the weight of the cantilever shaft 30.

In this embodiment, the first driving component 40 is located above the AGV chassis vehicle 10 and on the side of the adjusting plate 20 away from the cantilever shaft 30. The first driving component 40 is arranged on the AGV chassis vehicle 10. The first driving component 40 is used to drive the adjusting plate 20 to rotate around the first axis, so that the adjusting plate 20 drives the cantilever shaft 30 to rotate around the first axis, thereby making the axis of the cantilever shaft 30 parallel to the plane on which the AGV chassis vehicle 10 is located. The first driving component 40 can include an electric cylinder, an air cylinder, or a hydraulic cylinder, which will not be listed one by one in the embodiments of the present application. For example, the first driving component 40 includes an electric cylinder.

Thus, the first driving component 40 drives the adjusting plate 20 to rotate around the first axis, and the adjusting plate 20 drives the cantilever shaft 30 to rotate around the first axis to change the angle between the axis of the cantilever shaft 30 and the horizontal plane, which can make the axis of the cantilever shaft 30 parallel to the axis of the rotating shaft on the coil material table. In other words, the cantilever shaft 30 and the rotating shaft on the coil material table can be aligned, and the coil materials on the cantilever shaft 30 can be moved onto the coil material table without affecting a subsequent process.

In some embodiments, as shown in Figure 3, the AGV cantilever vehicle 100 further includes a first connecting rod 50 located between the adjusting plate 20 and the first driving component 40. One end of the first connecting rod 50 is hinged to the adjusting plate 20, and the other end is hinged to the first driving component 40. In this way, the first driving component 40 is connected to the adjusting plate 20 through the first connecting rod 50. The first driving component 40 is connected to the AGV chassis vehicle 10.

In this embodiment, an adjusting plate hinged seat 21 is arranged on the adjusting plate 20, and one end of the first connecting rod 50 connected to the adjusting plate 20 is provided with a first connecting rod hinge point 51. The adjusting plate 20 is hinged to the first connecting rod 50 through a hinge shaft passing through the adjusting plate hinged seat 21 and the first connecting rod hinge point 51.

Thus, the first driving component 40 drives the first connecting rod 50 to move, the first connecting rod 50 drives the adjusting plate 20 to rotate around the first axis, and the adjusting plate 20 drives the cantilever shaft 30 to rotate around the first axis to make the axis of the cantilever shaft 30 parallel to the axis of the rotating shaft on the coil material table. In other words, the cantilever shaft and the rotating shaft on the coil material table can be aligned, and the coil materials on the cantilever shaft 30 can be moved onto the coil material table.

In other embodiments, one end of the first driving component 40 is hinged to the adjusting plate 20, and the other end is hinged to the first fixed plate 70. In this way, the number of parts can be reduced, i.e., the structure of AGV cantilever vehicle 100 is simplified.

Thus, the first driving component 40 directly drives the adjusting plate 20 to rotate around the first axis, and the adjusting plate 20 drives the cantilever shaft 30 to rotate around the first axis to make the axis of the cantilever shaft 30 parallel to the axis of the rotating shaft on the coil material table. In other words, the cantilever shaft 30 and the coil material table can be aligned, and the coil materials on the cantilever shaft 30 can be moved onto the coil material table.

In yet other embodiments, an upper end of adjusting plate 20 is hinged to the AGV chassis vehicle 10. One end of the first drive component 40 is fixedly connected to the AGV chassis vehicle 10, and the other end of the first drive component 40 abuts against the adjusting plate 20.

Thus, the first driving component 40 pushes the adjusting plate 20 to rotate around the first axis, and the adjusting plate 20 drives the cantilever shaft 30 to rotate around the first axis such that the axis of the cantilever shaft 30 is parallel to the axis of the rotating shaft on the coil material table. In other words, the cantilever shaft 30 and the rotating shaft on the coil material table can be aligned, and the coil materials on the cantilever shaft 30 can be moved onto the coil material table.

In some embodiments, the AGV cantilever vehicle 100 further includes a horizontal sensor (not shown in the figure). The horizontal sensor is used to measure the angle between the axis of the cantilever shaft 30 and the horizontal plane. The horizontal sensor is fixedly mounted on the cantilever shaft 30 and electrically connected to the first driving component 40. In this way, the first driving component 40 can receive an angle signal measured by the horizontal sensor and drive the adjusting plate 20 to rotate around the first axis based on the angle.

Thus, the horizontal sensor measures the angle between the axis of the cantilever shaft 30 and the plane on which the AGV chassis vehicle 10 is located, and transmits the measured angle to the first driving component 40. If the first driving component 40 receives the angle measured by the horizontal sensor and determines that the angle does not meet the requirements, the first driving component 40 will continue to drive the adjusting plate 20 to rotate around the first axis, the adjusting plate 20 drives the cantilever shaft 30 to rotate around the first axis to change the angle between the axis of the cantilever shaft 30 and the horizontal plane until the angle between the axis of the cantilever shaft 30 and the horizontal plane meets the requirements. If the first driving component 40 receives the angle signal measured by the horizontal sensor and determines that the angle meets the requirements, the first driving component 40 stops driving the adjusting plate 20 to rotate around the first axis.

As one working mode of the horizontal sensor, throughout the entire process of transporting the coil material with the AGV cantilever vehicle 100, the horizontal sensor always maintains its working state, that is, the horizontal sensor is always transmitting the measured angle to the first driving component 40, the first driving component 40 drives the adjusting plate 20 to rotate around the first axis, and the adjusting plate 20 drives the cantilever shaft 30 to rotate around the first axis to change the angle between the axis of the cantilever shaft 30 and the horizontal plane. In this way, the angle between the axis of the cantilever shaft 30 and the horizontal plane can always meet the requirements. When coil materials need to be moved from the cantilever shaft 30 onto the coil material table, the cantilever shaft 30 can quickly align with the rotating shaft on the coil material table, and the coil materials can be moved from the cantilever shaft 30 onto the coil material table. In this way, time required for aligning the cantilever shaft 30 with the rotating shaft on the coil material table can be reduced, thereby increasing the frequency of transportation.

As another working mode of the horizontal sensor, the horizontal sensor only starts working when coil materials need to be moved from the cantilever shaft 30 onto the coil material table. When the coil materials are moved from the cantilever shaft 30 onto the coil material table, the cantilever shaft 30 stops moving, and the horizontal sensor measures the angle between the axis of the cantilever shaft 30 and the horizontal plane, then transmits the measured angle to the first driving component 40. The first driving component 40 drives the adjusting plate 20 to rotate around the first axis based on the angle, the adjusting plate 20 drives the cantilever shaft 30 to rotate around the first axis so that the angle between the axis of the cantilever shaft 30 and the horizontal plane meets the requirements. Then, the cantilever shaft 30 starts moving and aligns with the rotating shaft on the coil material table. The coil materials can be moved from the cantilever shaft 30 onto the coil material table. Since the horizontal sensor does not work constantly, a service life of the AGV cantilever vehicle 100 can be improved under the condition that the service life of the horizontal sensor remains unchanged.

In some embodiments, as shown in Figures 1 and 4, Figure 4 is a structural diagram of an adjusting plate and support pillars according to some embodiments. The AGV cantilever vehicle 100 further includes two support pillars 60 and a first fixed plate 70.

The two support pillars 60 are located on an upper surface of the AGV chassis vehicle 10, the two support pillars 60 are located on one side of the adjusting plate 20 away from the cantilever shaft 30. The support pillars 60 extend vertically, and are fixedly connected to the AGV chassis vehicle 10. The two support pillars 60 are respectively arranged on opposite sides of the AGV chassis vehicle 10 along an extension direction of the first axis, as shown in Figure 1, one support pillar 60 is arranged on the left side of the AGV chassis vehicle 10, and the other support pillar 60 is arranged on the right side of the AGV chassis vehicle 10. The two support pillars 60 are connected at one end away from the AGV chassis vehicle 10 to enhance the stability of the support pillars 60.

The first fixed plate 70 is located between the two support pillars 60 and the adjusting plate 20, and is arranged on the support pillars 60. The first fixed plate 70 is hinged to the adjusting plate 20, so that the adjusting plate 20 rotates around the first axis. The first driving component 40 is arranged on the first fixed plate 70. The first axis coincides with an axis of a hinge shaft connecting the first fixed plate 70 and the adjusting plate 20.

Exemplarily, as shown in Figure 2, the adjusting plate 20 is parallel to an extension direction of the first axis, and the first fixed plate 70 is parallel to the extension direction of the first axis. An upper end of the first fixed plate 70 is hinged to the upper end of the adjusting plate 20, and an axis of a hinge shaft X connecting the first fixed plate 70 and the adjusting plate 20 coincides with the first axis. Alternatively, exemplarily, the adjusting plate 20 is parallel to the extension direction of the first axis, and the first fixed plate 70 is parallel to the extension direction of the first axis. The upper end of the first fixed plate 70 is hinged to the upper end of the adjusting plate 20, and an axis of a hinge shaft connecting the first fixed plate 70 and the adjusting plate 20 coincides with the first axis.

One end of the cantilever shaft 30 fixedly connected to the adjusting plate 20 is provided with a fixing flange 33. By matching the fixing flange 33 with a fixed hole on the adjusting plate 20, a fixed connection between the cantilever shaft 30 and the adjusting plate 20 is achieved.

In some embodiments, as shown in Figures 1, 2, and 4, the AGV cantilever vehicle 100 further includes two lifting rails 1, four lifting sliders 2, a lifting screw rod 3, a lifting nut 4, and a lifting motor 5.

The lifting guide rails 1 extend vertically, and one lifting guide rail is installed on one support pillar 60. Two lifting sliders 2 are spaced vertically and are installed one lifting guide rail 1, and the first fixed plate 70 is fixedly connected to the four lifting sliders 2. The first fixed plate 70 is slidably connected to the two support pillars 60 by means of the lifting slider 2, so that the first fixed plate 70 can slide in a vertical direction. Further, the adjusting plate 20 hinged to the first fixed plate 70 and the cantilever shaft 30 fixedly connected to the adjusting plate 20 may slide in the vertical direction.

The lifting screw rod 3 extends vertically and is connected to the support pillars 60. The lifting screw rod 3 and the lifting nut 4 are installed in cooperation with a leading screw, and the lifting nut 4 is fixedly connected to the first fixed plate 70. The lifting motor 5 is fixedly mounted on the support pillars 60, and drives the lifting screw rod 3 to rotate through belt transmission (or chain transmission, gear rotation or coupling rotation). The lifting screw rod 3 drives the lifting nut 4 to move in the vertical direction, the lifting nut 4 drives the first fixed plate 70 to move in the vertical direction, and further drives the cantilever shaft 30 to move in the vertical direction, so that the cantilever shaft 30 can pick up materials from buffer tables at different heights or deliver materials to coil material tables at different heights, thereby expanding the application scope of the AGV cantilever vehicle 100.

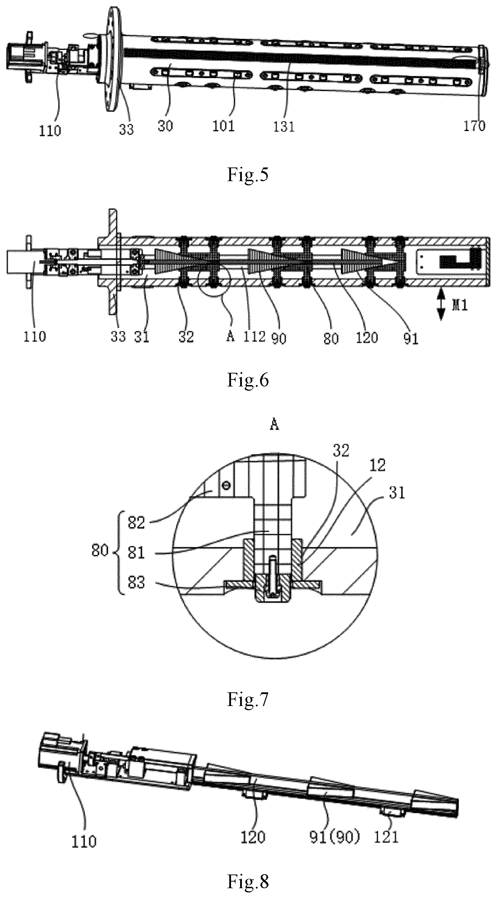

In some embodiments, as shown in Figures 5, 6, 7 and 8, Figure 5 is a structural diagram of the cantilever shaft according to some embodiments, Figure 6 is a cross-sectional structural diagram of the cantilever shaft according to some embodiments, Figure 7 is a partially enlarged view of section A in Figure 6, and Figure 8 is a structural diagram of a fixed strip and a second tension block according to some embodiments. The cantilever shaft 30 is provided with a first through-hole 31 and a second through-hole 32, the first through-hole 31 penetrates the cantilever shaft 30 along an axial direction of the cantilever shaft 30, and the second through-hole 32 penetrates the cantilever shaft 30 along a first direction M1. The first direction M1 intersects with the axis of the cantilever shaft 30, for example, the first direction M1 is perpendicular to the axis of the cantilever shaft 30.

As shown in Figures 6 and 8, the AGV cantilever vehicle 100 further includes a first tension block 80, a second tension block 90, and a second driving component 110.

As shown in Figure 6, the first tension block 80 is partially located within the first through-hole 31 and partially located within the second through-hole 32. The first tension block 80 can slide in the first direction M1, so that the first tension block 80 partially extends beyond an outer circumferential surface of the cantilever shaft 30 and abuts against the coil material to tightly press against the coil material. During the transportation of the coil material, the risk of the coil material shaking and the risk of the coil material falling off from the cantilever shaft 30 can be reduced.

Exemplarily, multiple first tension blocks 80 are evenly distributed circumferentially around the cantilever shaft 30, which can make the coil material more evenly stressed and reduce the risk of damage caused by uneven stress. For example, two, four or six first tension blocks 80 are evenly distributed circumferentially around the cantilever shaft. The embodiments of the present application will not be listed one by one.

As shown in Figure 8, the second tension block 90 is located within the first through-hole 31 and can slide along the axial direction of the cantilever shaft 30. The second tension block 90 includes a side wall 91, there is an angle between the side wall 91 and the axis of the cantilever shaft 30. The side wall 91 abuts against the first tension block 80. In this way, the second tension block 90 slides along the axial direction of the cantilever shaft 30, which can drive the first tension block 80 to slide along the first direction M1. The first tension block 80 partially extends from the outer circumferential surface of the cantilever shaft 30, abuts against the coil material to tightly press against the coil material.

Exemplarily, the angle between the side wall 91 and the axis of the cantilever shaft 30 remains constant, which ensures a consistent sliding speed of the first tension block 80 along the first direction M1, that is, the first tension block 80 is relatively stable during the process of pressing against the coil material, and a structure of the second tension block 90 is simple and easy to process. Alternatively, exemplarily, the angle between the side wall 91 and the axis of the cantilever shaft 30 gradually changes, allowing the sliding speed of the first tension block 80 along the first direction M1 to decrease from fast to slow, this enables the first tension block 80 to quickly approach a coil material and then slow down near the coil material. In this way, it can reduce the time taken for the first tension block 80 to tightly press against the coil material and ensure that the coil material is not damaged by the tension block.

The second driving component 110 is partially located within the first through-hole 31 and is fixedly mounted on the cantilever shaft 30. The second driving component 110 drives the second tension block 90 to slide along the axial direction of the cantilever shaft 30. The second driving component 110 can include an electric cylinder, an air cylinder, or a hydraulic cylinder, which will not be listed one by one in the embodiments of the present application. For example, the second driving component 110 includes an electric cylinder.

Thus, when it is necessary to tightly press against the coil material, the second driving component 110 drives the second tension block 90 to slide along the axial direction of the cantilever shaft 30, and the second tension block 90 drives the first tension block 80 to slide. The first tension block 80 partially extends beyond the outer circumferential surface of the cantilever shaft 30 and abuts against the coil material to tightly press against the coil material, thus reducing the risk of the coil material falling off the cantilever shaft 30.

In some embodiments, as shown in Figure 8, the AGV cantilever vehicle 100 further includes two tension sliders 121, a tension guide rail 122, and a fixed strip 120. The two tension sliders 121 are spaced apart along the axial direction of the cantilever shaft 30 and fixedly connected to an inner wall of the cantilever shaft 30. The tension guide rail 122 is located within the first through-hole 31 and extends along the axial direction of the cantilever shaft 30. The tension guide rail 122 is slidably connected to the tension slider 121. The fixed strip 120 is located within the first through-hole 31 and extends along the axial direction of the cantilever shaft 30. The fixed strip 120 is fixedly connected to the tension guide rail 122, and one end of the fixed strip 120 close to the adjusting plate 20 is connected to the second driving component 110, so that the second driving component 110 can drive the fixed strip 120 to slide along the axial direction of the cantilever shaft 30.

Multiple second tension blocks 90 are symmetrically arranged about the fixed strip 120 and fixedly connected to the fixed strip 120. The second tension blocks 90 located on one side of the fixed strip 120 are spaced apart along the axial direction of the cantilever shaft 30.

Thus, when it is necessary to tightly press against the coil material, the second driving component 110 drives the fixed strip 120 to slide along the axial direction of the cantilever shaft 30, and the fixed strip drives the second tension block 90 to slide, and the second tension block 90 drives the first tension block 80 to slide. The first tension block 80 partially extends beyond the outer circumferential surface of the cantilever shaft 30 and abuts against the coil material to tightly press against the coil material, thus reducing the risk of the coil material falling off the cantilever shaft 30.

In some embodiments, as shown in Figures 6 and 7, the first tension block 80 includes a first sub part 81 and a second sub part 82, with a portion of the first sub part 81 located within the second through-hole 32. The second sub part 82 is located within the first through-hole 31 and connected to one end of the first sub part 81 facing an inner side of the first through-hole 31 along the first direction M1. The second tension block 90 is triangular or isosceles trapezoidal in shape, and the side wall 91 is inclined and abuts against the first sub part 81.

The AGV cantilever vehicle 100 further includes an elastic member (not shown in the figure), the elastic member is located within the first through-hole 31. One end of the elastic member is connected to the second sub part 82, and the other end of the elastic member is connected to the cantilever shaft 30, and can generate a force that causes the first tension block 80 to move towards the axis of the cantilever shaft 30.

Thus, when it is necessary to tightly press against the coil material, the second driving component 110 drives the second tension block 90 to slide, and the second tension block 90 drives the first tension block 80 to slide. The first sub part 81 extends beyond the outer circumferential surface of the cantilever shaft, and one end of the first sub part 81 away from the second sub part 82 abuts against the coil material to tightly press against the coil material, thus reducing the risk of the coil material falling off the cantilever shaft 30.

When the coil material needs to be transferred from the cantilever shaft 30 to the coil material table, the second driving component 110 drives the second tension block 90 to slide in an opposite direction. Under the action of the elastic force of the elastic member, the first tension block 80 moves in a direction close to the axis of the cantilever shaft 30. One end of the first sub part 81 away from the second sub part 82 retracts into the outer circumferential surface of the cantilever shaft 30, and the first tension block 80 separates from the coil material. At this time, the coil material can slide freely on the cantilever shaft 30, and the coil material can be moved from the cantilever shaft 30 onto the coil material table.

Exemplarily, along the axial direction of the cantilever shaft 30, a size of at least a portion of the second sub part 82 is larger than a size of the first sub part 81, so that the first sub part 81 and the second sub part 82 form a step for connecting the elastic member. One end of the elastic member abuts against one end of the second sub part 82 close to the first sub part 81, and the other end of the elastic member abuts against the inner wall of the cantilever shaft 30. For example, the elastic member can be a compression spring.

In some embodiments, as shown in Figures 6 and 7, the first tension block 80 further includes a third sub part 83, the third sub part 83 is located on one side of the first sub part 81 away from the second sub part 82 and is fixedly connected to the first sub part 81. A material of the third sub part 83 includes a material with relatively high hardness, which can improve a service life of the first tension block 80. Exemplarily, the first sub part 81 and the third sub part 83 are fixedly connected by mean of a bolt, which facilitates a replacement of the third sub part 83.

In some embodiments, as shown in Figure 7, the AGV cantilever vehicle further includes a linear bearing 12 installed in the second through-hole 32. A friction coefficient of the linear bearing 12 is low, which can reduce a friction coefficient between the first tension block 80 and the second through-hole 32, so as to improve the service life of the first tension block 80.

When the AGV cantilever vehicle includes the elastic member, one end of the elastic member can abut against one end of the second sub part 82 close to the first sub part 81, and the other end of the elastic member can abut against the linear bearing.

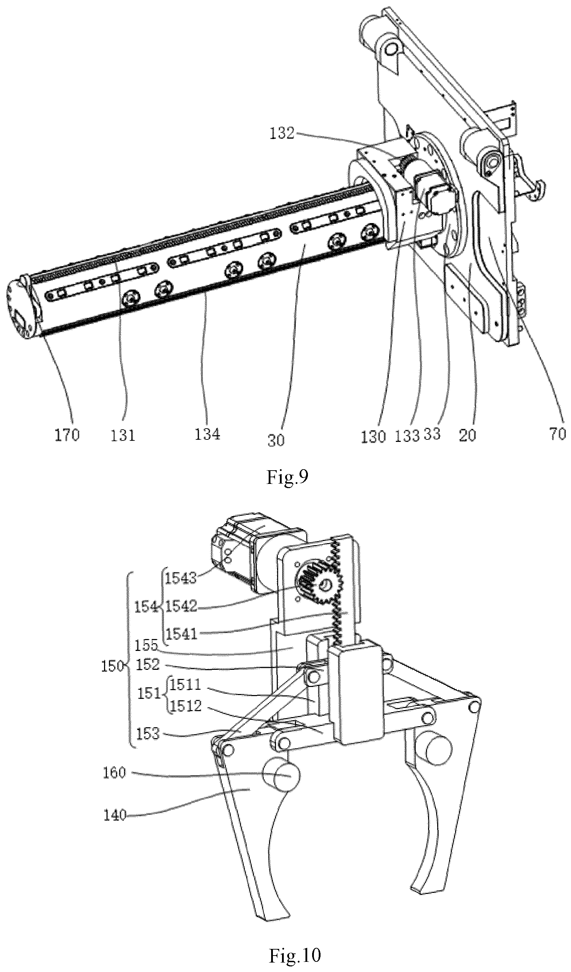

In some embodiments, as shown in Figures 2, 9, and 10, Figure 9 is a structural diagram of a moving member and a cantilever shaft according to some embodiments, and Figure 10 is a structural diagram of a clamping jaw according to some embodiments. The AGV cantilever vehicle further includes a moving member 130, two clamping jaws 140, and a first driving mechanism 150.

The moving member 130 surrounds a portion of the cantilever shaft 30 and is slidably connected to the cantilever shaft 30, so that the moving member 130 can slide along the axial direction of the cantilever shaft 30, and the moving member 130 can move the coil material from one end of the cantilever shaft 30 to the other end.

The two clamping jaws 140 are located on one side of the moving member 130 away from the adjusting plate 20; the two clamping jaws 140 are respectively arranged on both sides of the cantilever shaft 30 and connected to the moving member 130, so that the clamping jaws 140 can rotate in a direction away from or towards the cantilever shaft 30. When the clamping jaw 140 rotates along a direction close to the cantilever shaft 30, it can clamp the coil material. When the clamping jaw 140 rotates along a direction away from the cantilever shaft 30, it releases the coil material.

Exemplarily, a shape of a portion of the clamping jaw 140 that contacts with the coil material is a circular arc, which can increase a contact area between the coil material and the clamping jaw 140, thereby increasing the force between the clamping jaw 140 and the coil material.

The first driving mechanism 150 is arranged on a surface of the moving member 130 away from the adjusting plate 20. The first driving mechanism 150 is configured to drive the clamping jaw 140 to rotate in a direction away from or towards the cantilever shaft 30, so that the clamping jaw 140 clamps or releases the coil material.

Thus, when it is necessary to move the coil material from one end of the cantilever shaft 30 to the other end, the first driving mechanism 150 drives the clamping jaw 140 to rotate in the direction towards the cantilever shaft 30 to clamp the coil material. Then, the moving member 130 moves along the axial direction of the cantilever shaft 30, to move the coil material from one end of the cantilever shaft 30 to the other end.

One end of the cantilever shaft 30 close to the adjusting plate 20 is fixedly connected to the adjusting plate 20, so that the end of the cantilever shaft 30 close to the adjusting plate 20 is supported by the adjusting plate 20. The coil material is located at one end of the cantilever shaft 30 close to the adjusting plate 20. As the coil material is supported by the cantilever shaft 30, the end of the cantilever shaft 30 close to the adjusting plate 20 is supported by the adjusting plate 20. Furthermore, the coil material is supported by the adjusting plate 20, which can reduce the risk of rigid deformation of the cantilever shaft 30.

**In** some embodiments, as shown in Figures 2 and 10, the first driving mechanism 150 includes a fixed block 151, a slider 152, two second connecting rods 153, and a third driving component 154.

The fixed block 151 includes a guide rail part 1511 and a fixed part 1512. The guide rail part 1511 is arranged on a surface of the moving member 130 away from the adjusting plate 20, and extends radially along the cantilever shaft 30. The fixed part 1512 is arranged on a surface of the guide rail part 1511 close to the cantilever shaft 30, and is located between the two clamping jaws 140. The fixed part 1512 is hinged to the clamping jaws 140, so that the clamping jaws 140 can rotate in a direction away from or towards the cantilever shaft 30.

The slider 152 is slidably connected to the guide rail part 1511.

The two second connecting rods 153 are respectively arranged on both sides of the fixed block 151 along a direction perpendicular to an extension of the guide rail part 1511. One end of each second connecting rod 153 is hinged to the slider 152, and the other end of the second connecting rod 153 is hinged to a clamping jaw 140 located on the same side of the fixed block 151.

The third driving component 154 is arranged on the moving member 130, and is used to drive the slider 152 to slide radially along the cantilever shaft 30.

Thus, the third driving component 154 drives the slider 152 to slide radially along the cantilever shaft 30, and the slider 152 drives the second connecting rod 153 to move. The second connecting rod 153 drives the clamping jaw 140 to rotate in a direction towards the cantilever shaft 30 to clamp the coil material, or to rotate in a direction away from the cantilever shaft 30 to release the coil material.

In some embodiments, as shown in Figures 3 and 9, the AGV cantilever vehicle 100 further includes a moving rack 131, a moving gear 132, a moving motor 133, a moving guide rail 134, and a moving slider 135. The moving rack 131 extends along the axial direction of the cantilever shaft 30 and is installed on the outer circumferential surface of the cantilever shaft 30. The moving gear 132 is arranged in mesh with the moving rack 131. The moving motor 133 is installed on the moving member 130 and fixedly connected to the moving gear 132. The moving guide rail 134 extends along the axial direction of the cantilever shaft 30 and is fixedly mounted on the outer circumferential surface of the cantilever shaft 30, with the moving guide rail 134 partially located between the moving member 130 and the cantilever shaft 30. The moving slider 135 is slidably installed with the moving guide rail 134 and is fixedly connected to the moving member 130.

Thus, the moving motor 133 drives the moving gear 132 to rotate, and under the action of the moving rack 131, the moving gear 132 slides along the axial direction of the cantilever shaft 30. The moving gear 132 drives the moving member 130 to slide along the axial direction of the cantilever shaft 30, and the moving member 130 drives the clamping jaw 140 to slide along the axial direction of the cantilever shaft 30, so as to move the coil material from one end of the cantilever shaft 30 to the other end.

In some embodiments, as shown in Figure 10, the third driving component 154 includes a clamping rack 1541, a clamping gear 1542, and a clamping motor 1543. An extension direction of the clamping rack 1541 is the same as that of the guide rail part 1511, and the clamping rack 1541 is fixedly connected to the slider 152. The clamping gear 1542 is installed in mesh with the clamping rack 1541. The clamping motor 1543 is installed on the moving member 130 and fixedly connected to the clamping gear 1542.

Thus, the clamping motor 1543 drives the clamping gear 1542 to rotate, and the clamping gear 1542 drives the clamping rack 1541 to move radially along the cantilever shaft 30. The clamping rack 1541 drives the slider 152 to move, and the slider 152 drives the second connecting rod 153 to move. The second connecting rod 153 drives the clamping jaw 140 to rotate in a direction towards the cantilever shaft 30 to clamp the coil material, or to rotate in a direction away from the cantilever shaft 30 to release the coil material.

In other embodiments, the third driving component 154 includes an air cylinder, an electric cylinder, or a hydraulic cylinder, which will not be listed one by one in the embodiments of the present application. For example, the third driving component 154 includes an electric cylinder, which is installed on the moving member 130 and fixedly connected to the slider 152.

Thus, the third driving component 154 directly drives the slider 152 to move radially along the cantilever shaft 30, and the slider 152 drives the second connecting rod 153 to move. The second connecting rod 153 drives the clamping jaw 140 to rotate in a direction towards the cantilever shaft 30 to clamp the coil material, or to rotate in a direction away from the cantilever shaft 30 to release the coil material.

In some embodiments, the AGV cantilever vehicle 100 further includes a second fixed plate 155 located between the fixed block 151 and the moving member 130. The second fixed plate 155 is fixedly mounted on the moving member 130 by means of screws, and the fixed block 151 is fixedly mounted on a surface of the second fixed plate 155 away from the moving member 130, so that the fixed block 151 is fixedly mounted on the moving member 130 by means of the second fixed plate 155.

As shown in Figure 10, the second fixed plate 155 is a Z-shaped plate bent along the direction of the moving member 130.

In some embodiments, as shown in Figure 10, the AGV cantilever vehicle further includes a material pushing block 160 fixedly mounted on one side of the clamping jaw 140 away from the moving member 130, with one end of the material pushing block 160 away from the clamping jaw 140 being farthest from the moving member 130. In this way, during the process of pushing the coil material, one end of the material pushing block 160 away from the clamping jaw abuts against the coil material. The material of the material pushing block 160 includes elastic material, and during the process of pushing the coil material, the material pushing block 160 can play a buffering role.

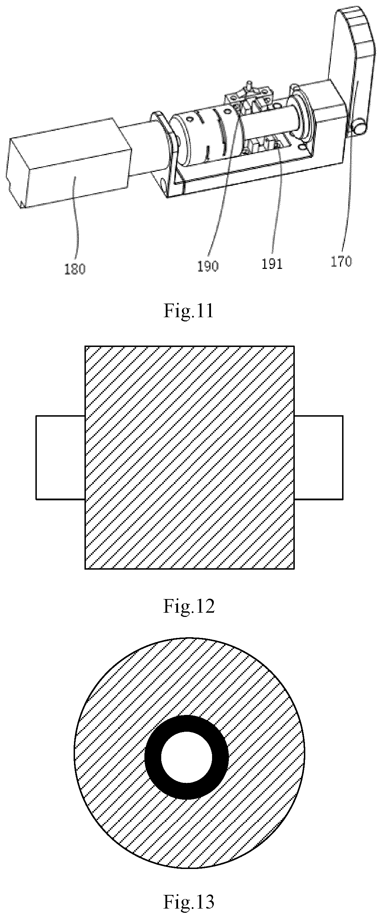

In some embodiments, as shown in Figures 9 and 11, Figure 11 is a structural diagram of a material retaining plate according to some embodiments. The AGV cantilever vehicle 100 further includes a material retaining plate 170 located on one side of the cantilever shaft 30 away from the adjusting plate 20, and the material retaining plate 170 rotates around a second axis to extend beyond or retract into an outer circumferential surface of the cantilever shaft 30. Wherein, the second axis is parallel to and spaced apart from an axis of the cantilever shaft 30.

Thus, the material retaining plate 170 rotates around the second axis and extends beyond the outer circumferential surface of the cantilever shaft 30. The material retaining plate 170 can block the movement of the coil material and reduce the risk of the coil material falling off the cantilever shaft 30. The material retaining plate 170 rotates around the second axis and retracts into the outer circumferential surface of the cantilever shaft 30. The material retaining plate 170 cannot block the movement of the coil material, and the coil material can be moved from the buffer table onto the cantilever shaft 30 or from the cantilever shaft 30 onto the coil material table.

In other embodiments, the material retaining plate is located on one side of the cantilever shaft 30 away from the adjusting plate 20, and rotates around the axis of the cantilever shaft 30 to extend beyond or retract into the outer circumferential surface of the cantilever shaft 30.

In some embodiments, as shown in Figure 11, the AGV cantilever vehicle 100 further includes a material retaining motor 180, a first optical sensor 190, and a second optical sensor 191. The material retaining motor 180 is located within the first through-hole 31 at a position away from the first driving component 40 and is fixedly mounted on the cantilever shaft 30. The material retaining motor 180 is used to drive the material retaining plate 170 to rotate along the second axis, the second axis coincides with an axis of a hinge shaft of the material retaining plate 170. The first optical sensor 190 is connected to the material retaining motor 180 to detect whether the material retaining plate 170 is in an extended state. The second optical sensor 191 is connected to the material retaining motor 180 to detect whether the material retaining plate 170 is in a retracted state. When the material retaining plate 170 extends beyond the cantilever shaft 30, the first optical sensor 190 transmits a trigger signal to the material retaining motor 180. At this time, the coil material cannot be moved from the buffer table onto the cantilever shaft 30, or the coil material cannot be moved from the cantilever shaft 30 onto the coil material table. When the material retaining plate 170 retracts into the cantilever shaft 30, the second optical sensor 191 transmits a trigger signal to the material retaining motor 180. At this time, the coil material can be moved from the buffer table onto the cantilever shaft 30, or the coil material can be moved from the cantilever shaft 30 onto the coil material table.

In this embodiment, the material retaining plate 170, material retaining motor 180, first optical sensor 190, and second optical sensor 191 are eccentrically arranged in the cantilever shaft 30, allowing the material retaining plate 170 to extend beyond or retract into the outer circumferential surface of the cantilever shaft 30 as the material retaining plate 170 rotates along the second axis.

At the same time, the material retaining plate 170 in this embodiment is in a default state where the material retaining plate 170 extends beyond the outer circumferential surface of the cantilever shaft 30. When the material retaining plate 170 is driven by the material retaining motor 180, the material retaining plate 170 retracts into the outer circumferential surface of the cantilever shaft 30.

In the embodiment of the present application, the AGV cantilever vehicle 100 further includes a controller, and the controller is electrically connected to the material retaining motor 180. When the material retaining plate 170 needs to extend beyond the cantilever shaft 30, the controller transmits an extension command to the material retaining motor 180. After receiving the extension command, the material retaining motor 180 drives the material retaining plate 170 to extend beyond the outer circumferential surface of the cantilever shaft 30.

When the material retaining plate 170 reaches a preset position, the first optical sensor 190 sends a trigger signal, the trigger signal is transmitted back to the controller. After receiving the trigger signal, the controller controls the material retaining motor 170 to stop moving, allowing the material retaining plate 170 to remain in the extended state.

When the material retaining plate 170 needs to retract into the cantilever shaft 30, the controller transmits a retraction command to the material retaining motor 180, after receiving the retraction command, the material retaining motor 180 drives the material retaining plate 170 to retract into the outer circumferential surface of the cantilever shaft 30.

When the material retaining plate 170 reaches a preset position, the second optical sensor 191 sends a trigger signal, the trigger signal is transmitted back to the controller. After receiving the trigger signal, the controller controls the material retaining motor 170 to stop moving, allowing the material retaining plate 170 to remain in the retracted state.

In some embodiments of the present application, a motor with a built-in encoder can be used as the material retaining motor 180. Since the motor with the built-in encoder can recognize its own position, the design of the first optical sensor 190 and the second optical sensor 191 can be omitted, further optimizing the structure of the AGV cantilever vehicle 100.

In some embodiments, as shown in Figure 5, the AGV cantilever vehicle 100 further includes multiple roller bearings 101, which are installed on an outer wall of the cantilever shaft 30 and partially protrude from the outer wall of the cantilever shaft 30, with axes of the roller bearings 101 being perpendicular to the axis of the cantilever shaft 30. The multiple roller bearings 101 are spaced apart along the axial direction of the cantilever shaft 30 and evenly distributed circumferentially around the cantilever shaft 30. The friction between the roller bearing 101 and the coil material is rolling friction, which can reduce the friction coefficient between the cantilever shaft 30 and the coil material and improve the service life of the cantilever shaft 30.

In some embodiments, the AGV cantilever vehicle 100 further includes a visual recognition component (not shown in the figure), the visual recognition component is installed on the cantilever shaft 30 for recognizing a positioning code on the coil material table. By means of the positioning code, the AGV cantilever vehicle 100 can determine whether the cantilever shaft 30 is aligned with the coil material table.

In some embodiments, as shown in Figures 12 and 13, Figure 12 is a front view of a coil material according to some embodiments, and Figure 13 is a left view of a coil material according to some embodiments. The coil material includes a reel and a material, and the material is sleeved onto the reel. An axial size of the coil material is smaller than that of the reel, and there is a gap between two ends of the coil material and two ends of the reel.

The process of the coil material moves from one buffer table onto one coil material table is as follows:
Picking up a material: AGV chassis vehicle 10 travels to the vicinity of the buffer table, and then the lifting motor 5 drives the first fixed plate 70 to move to a designated height along the vertical direction, so that the cantilever shaft 30 can be inserted into the reel. The horizontal sensor measures an angle between the axial direction of the cantilever shaft 30 and the horizontal plane, and transmits the measured angle to the first driving component 40. The first driving component 40 drives the adjusting plate 20 to rotate around the first axis based on the measured angle. The adjusting plate 20 drives the cantilever shaft 30 to rotate around the first axis to make the angle between the axis of the cantilever shaft 30 and the horizontal plane meet the requirements. Then the material retaining motor 180 drives the material retaining plate 170 to retract into the outer circumferential surface of the cantilever shaft 30, and the cantilever shaft 30 is inserted into the reel. Next, the third driving component 154 drives the slider 152 to slide radially along the cantilever shaft 30, and the slider 152 drives the second connecting rod 153 to move. The movement of the second connecting rod 153 drives the clamping jaw 140 to rotate in a direction towards the cantilever shaft 30 to clamp the reel. The moving motor drives the moving gear to rotate, and under the action of the moving rack, the moving gear drives the moving member 130 to move along the axial direction of the cantilever shaft 30, and the moving member 130 drives the clamping jaw 140 to move, so as to move the coil material from one end of the cantilever shaft 30 away from the adjusting plate 20 to one end close to the adjusting plate 20. The third driving component 154 drives the slider 152 to slide radially in an opposite direction along the cantilever shaft 30, and the slider 152 drives the second connecting rod 153 to move. The movement of the second connecting rod 153 drives the clamping jaw 140 to rotate in a direction away from the cantilever shaft 30 to release the reel. The second driving component 110 drives the second tension block 90 to slide along the axial direction of the cantilever shaft 30, and the second tension block 90 drives the first tension block 80 to slide alone the first direction M1. The first tension block 80 partially extends beyond the outer wall of the cantilever shaft 30 and abuts against the coil material to tightly press against the coil material. The material retaining motor 180 drives the material retaining plate 170 to rotate in an opposite direction around the second axis, allowing the material retaining plate 170 to extend beyond the outer circumferential surface of the cantilever shaft 30.

Specifically, the controller is electrically connected to the material retaining motor 180. Before the cantilever shaft 30 is inserted into the coil material, since the material retaining plate 170 is in the default state, the cantilever shaft 30 cannot be inserted into the coil material. Therefore, the controller transmits a retraction command to the material retaining motor 180, after receiving the command, the material retaining motor 180 drives the material retaining plate 170 to retract into the outer circumferential surface of the cantilever shaft 30.

When the material retaining plate 170 reaches a preset position, the second optical sensor 191 sends a trigger signal, the trigger signal is transmitted back to the controller. After receiving the trigger signal, the controller controls the material retaining motor 170 to stop moving, allowing the material retaining plate 170 to remain in the retracted state.

When the cantilever shaft 30 is loaded with a coil material and needs to return to its default state, the controller transmits an extension command to the material retaining motor 180, after receiving the extension command, the material retaining motor 180 drives the material retaining plate 170 to extend beyond the outer circumferential surface of the cantilever shaft 30.

When the material retaining plate 170 reaches a preset position, the first optical sensor 190 sends a trigger signal, the trigger signal is transmitted back to the controller. After receiving the trigger signal, the controller controls the material retaining motor 170 to stop moving, allowing the material retaining plate 170 to remain in the extended state.

Delivering the material: the AGV chassis vehicle 10 leaves the buffer table and travels to the vicinity of the coil material table, the lifting motor 5 drives the first fixed plate 70 to move to a designated height along the vertical direction to align the cantilever shaft 30 with the rotating shaft on the coil material table. The horizontal sensor measures an angle between the axial direction of the cantilever shaft 30 and the horizontal plane to ensure that the angle between the axis of the cantilever shaft 30 and the horizontal plane meets the requirements. The visual recognition component identifies the positioning code on the rotating shaft on the coil material table and performs positioning, that is, the cantilever shaft 30 is aligned with the rotating shaft on the coil material table. The material retaining motor 180 drives the material retaining plate 170 to retract into the outer circumferential surface of the cantilever shaft 30. The second driving component 110 drives the second tension block 90 to slide in the opposite direction along the axial direction of the cantilever shaft 30. Under the action of the elastic member, the first tension block 80 slides in an opposite direction along the first direction M1, retracts into the outer circumferential surface of the cantilever shaft 30, allowing the first tension block 80 to separate from the coil material. The moving member 130 moves in the opposite direction along the axial direction of the cantilever shaft 30, pushing the coil material from the cantilever shaft 30 onto the coil material table.

Specifically, the controller is electrically connected to the material retaining motor 180. Before the coil material separates from the cantilever shaft 30, since the material retaining plate 170 is in the default state, the coil material cannot separate from the cantilever shaft 30. Therefore, the controller transmits a retraction command to the material retaining motor 180, after receiving the command, the material retaining motor 180 drives the material retaining plate 170 to retract into the outer circumferential surface of the cantilever shaft 30.

When the material retaining plate 170 reaches a preset position, the second optical sensor 191 sends a trigger signal, the trigger signal is transmitted back to the controller. After receiving the trigger signal, the controller controls the material retaining motor 170 to stop moving, allowing the material retaining plate 170 to remain in the retracted state.

When the cantilever shaft 30 unloads the coil material and needs to return to its default state, the controller transmits an extension command to the material retaining motor 180, after receiving the extension command, the material retaining motor 180 drives the material retaining plate 170 to extend beyond the outer circumferential surface of the cantilever shaft 30.

When the material retaining plate 170 reaches a preset position, the first optical sensor 190 sends a trigger signal, the trigger signal is transmitted back to the controller. After receiving the trigger signal, the controller controls the material retaining motor 170 to stop moving, allowing the material retaining plate 170 to remain in the extended state.

The process of moving multiple coil materials from one buffer table onto multiple coil material tables is as follows. The embodiments of the present application illustrate the process of moving two coil materials from one buffer table (two coil materials are arranged along the axial direction of the coil materials) to two coil material tables.

Picking up materials: the AGV chassis vehicle 10 travels to the vicinity of the buffer table, and then the lifting motor 5 drives the first fixed plate 70 to move to a designated height along the vertical direction, so that the cantilever shaft 30 can be inserted into reels. The horizontal sensor measures an angle between the axial direction of the cantilever shaft 30 and the horizontal plane to ensure that the angle between the axis of the cantilever shaft 30 and the horizontal plane meets the requirements. Then the material retaining motor 180 drives the material retaining plate 170 to retract into the outer circumferential surface of the cantilever shaft 30. The cantilever shaft 30 is inserted into two reels. Next, the third driving component 154 drives the clamping jaw 140 to rotate in the direction close to the cantilever shaft 30. The clamping jaw 140 clamps a reel close to the adjusting plate 20, and the moving member 130 drives the clamping jaw 140 to move along the axial direction of the cantilever shaft 30, to move a coil material close to the adjusting plate 20 to one end of the cantilever shaft 30 close to the adjusting plate 20. The third driving component 154 drives the clamping jaw 140 to rotate in a direction away from the cantilever shaft 30, releasing the reel. The second driving component 110 drives the first tension block 80 to slide along the first direction M1 to tightly press against the coil material. The material retaining motor 180 drives the material retaining plate 170 to rotate in the opposite direction, and the material retaining plate 170 extends beyond the outer circumferential surface of the cantilever shaft 30.

Delivering materials for the first time: the AGV chassis vehicle 10 leaves the buffer table and travels to the vicinity of a first coil material table, the lifting motor 5 drives the first fixed plate 70 to move to a designated height along the vertical direction to align the cantilever shaft 30 with the rotating shaft on the coil material table. The horizontal sensor measures an angle between the axial direction of the cantilever shaft 30 and the horizontal plane to ensure that the angle between the axis of the cantilever shaft 30 and the horizontal plane meets the requirements. The visual recognition component identifies the positioning code on the rotating shaft on the first coil material table and performs positioning, that is, the cantilever shaft 30 and the rotating shaft on the coil material table are aligned. The material retaining motor 180 drives the material retaining plate 170 to retract into the outer circumferential surface of the cantilever shaft 30. The second driving component 110 drives the second tension block 90 to slide in the opposite direction along the axial direction of the cantilever shaft 30. Under the action of the elastic member, the first tension block 80 slides in the opposite direction along the first direction M1, retracts into the outer circumferential surface of the cantilever shaft 30, allowing the first tension block 80 to separate from a coil material. The third driving component 154 drives the clamping jaw 140 to clamp the reel, and the moving member 130 drives the clamping jaw 140 to move along the axial direction of the cantilever shaft 30. The clamping jaw 140 clamps a coil material close to the adjusting plate 20 and pushes a coil material away from the adjusting plate 20 to push the coil material away from the adjusting plate 20 onto the coil material table. Then the movement of the moving member 130 drives the remaining one coil material to move to one end of the cantilever shaft 30 close to the adjusting plate 20. The clamping jaw 140 releases the coil material, the first tension block 80 tightly presses against the coil material, and the material retaining plate 170 extends beyond the outer circumferential surface of the cantilever shaft 30.

Delivering materials for the second time: the AGV chassis vehicle 10 leaves the first coil material table and travels to the vicinity of the second coil material table. The process of delivering materials for the second time is the same as the material delivering process of moving the coil material from one buffer table onto one coil material table, which will not be repeated here.

The process of moving coil materials on multiple buffer tables onto multiple coil material tables is as follows. The embodiments of the present application illustrate the process of moving one coil material on each of two buffer tables to two coil material tables.

Picking up a material for the first time: this process is the same as the material picking up process of moving multiple coil materials from one buffer table to multiple coil material tables, and will not be repeated here.

Picking up a material for the second time: the AGV chassis vehicle 10 leaves the first buffer table and travels to the vicinity of the second buffer table. The AGV chassis vehicle 10 travels to the vicinity of the buffer table and the cantilever shaft 30 moves to a designated height. The horizontal sensor measures an angle between the axial direction of the cantilever shaft 30 and the horizontal plane to ensure that the angle between the axis of the cantilever shaft 30 and the horizontal plane meets the requirements. Then the material retaining motor 180 drives the material retaining plate 170 to retract into the outer circumferential surface of the cantilever shaft 30, and the cantilever shaft 30 is inserted into a reel on the second buffer table. The second driving component 110 drives the first tension block 80 to slide along the first direction M1 to tightly press against the coil material. The material retaining motor 180 drives the material retaining plate 170 to rotate in an opposite direction, and the material retaining plate 170 extends beyond the outer circumferential surface of the cantilever shaft 30.

Delivering materials for the first time: this process is the same as the first delivering material process of moving multiple coil materials from one buffer table onto multiple coil material tables, and will not be repeated here.

Delivering materials for the second time: this process is the same as the second delivering material process of moving multiple coil materials from one buffer table onto multiple coil material tables, and will not be repeated here.

In the description of this specification, specific features, structures, materials, or characteristics may be combined in any one or more embodiments or examples in a suitable manner.

The above description is only a specific implementation of the present application, but the scope of protection of the present application is not limited to this. Any changes or replacements that come to mind within the technical scope disclosed in the present application by any skilled in the art familiar with the technical field should be included in the scope of protection of the present application. Therefore, the scope of protection of the present application should be based on the scope of protection of the claims.

The above are only preferred embodiments of the present invention and are not intended to limit the present invention. Any modifications, equivalent substitutions, improvements, etc. made within the spirit and principles of the present invention should be included within the claimed scope of the present invention.

## Claims

1. An AGV cantilever vehicle, comprising:
an AGV chassis vehicle;
an adjusting plate located above the AGV chassis vehicle and arranged on the AGV chassis vehicle; wherein the adjusting plate can rotate around a first axis;
a cantilever shaft located above the AGV chassis vehicle; wherein the adjusting plate is located on one side of the cantilever shaft along an axial direction of the cantilever shaft, one end of the cantilever shaft close to the adjusting plate is fixedly connected to the adjusting plate;
a first driving component located above the AGV chassis vehicle and on one side of the adjusting plate away from the cantilever shaft; wherein the first driving component is arranged on the AGV chassis vehicle and configured to drive the adjusting plate to rotate around the first axis to adjust an angle between the cantilever shaft and a horizontal plane.

2. The AGV cantilever vehicle according to claim 1, wherein the AGV cantilever vehicle further comprises:
a first connecting rod located between the adjusting plate and the first driving component, with one end of the first connecting rod hinged to the adjusting plate and the other end of the first connecting rod hinged to the first driving component;
the first driving component is connected to the AGV chassis vehicle.

3. The AGV cantilever vehicle according to claim 2, wherein the AGV cantilever vehicle further comprises:
a horizontal sensor fixedly mounted on the cantilever shaft and electrically connected to the first driving component, wherein the horizontal sensor is configured to measure an angle between an axis of the cantilever shaft and the horizontal plane;
wherein the first driving component drives the adjusting plate to rotate around the first axis based on the angle measured by the horizontal sensor.

4. The AGV cantilever vehicle according to claim 1, wherein the AGV cantilever vehicle further comprises:
two support pillars located above the AGV chassis vehicle and located on the side of the adjusting plate away from the cantilever shaft; wherein the support pillars extend vertically and are fixedly connected to the AGV chassis vehicle, the two support pillars are respectively arranged on opposite sides of the AGV chassis vehicle;
a first fixed plate located between the two support pillars and the adjusting plate, wherein the first fixed plate is installed on the support pillars, the first fixed plate is hinged to the adjusting plate, so that the adjusting plate rotates around the first axis; the first driving component is arranged on the first fixed plate.

5. The AGV cantilever vehicle according to any one of claims 1-4, wherein the cantilever shaft is provided with a first through-hole and a second through-hole, wherein the first through-hole penetrates the cantilever shaft along the axial direction of the cantilever shaft, and the second through-hole penetrates the cantilever shaft along a first direction; the first direction intersects with an axis of the cantilever shaft;
the AGV cantilever vehicle further comprises:
a first tension block, wherein the first tension block is partially located within the first through-hole and partially located within the second through-hole, and the first tension block can slide along the first direction;
a second tension block, wherein the second tension block is located within the first through-hole and can slide along the axial direction of the cantilever shaft; the second tension block comprises a side wall, there is an angle between the side wall and the axis of the cantilever shaft, the side wall abuts against the first tension block to drive the second tension block to slide along the first direction, so that the first tension block partially extends beyond an outer circumferential surface of the cantilever shaft;
a second driving component, wherein the second driving component is partially located within the first through-hole and fixedly mounted on the cantilever shaft, and is configured to drive the second tension block to slide along the axial direction of the cantilever shaft.

6. The AGV cantilever vehicle according to claim 5, wherein the AGV cantilever vehicle further comprises two tension sliders, a tension guide rail, and a fixed strip;
the two tension sliders are spaced apart along the axial direction of the cantilever shaft and fixedly connected to an inner wall of the cantilever shaft;
the tension guide rail is located within the first through-hole and extends along the axial direction of the cantilever shaft, the tension guide rail is slidably connected to the tension slider.

7. The AGV cantilever vehicle according to claim 5, wherein the first tension block comprises:
a first sub part at least partially located within the second through-hole;
a second sub part located within the first through-hole, the second sub part is connected to one end of the first sub part along the first direction; along the axial direction of the cantilever shaft, a size of at least a portion of the second sub part is larger than a size of the first sub part;
the AGV cantilever vehicle further comprises:
an elastic member located within the first through-hole, with one end of the elastic member connected to the second sub part and the other end of the elastic member connected to the cantilever shaft, and the elastic member is capable of generating a force that causes the first tension block to move towards the axis of the cantilever shaft.

8. The AGV cantilever vehicle according to claim 5, wherein the first tension block further comprises a third sub part, the third sub part is located on one side of the first sub part away from the second sub part and connected to the first sub part;
the AGV cantilever vehicle further comprises a linear bearing installed within the second through-hole;
one end of the elastic member abuts against one end of the second sub part close to the first sub part, and the other end of the elastic member abuts against the linear bearing.

9. The AGV cantilever vehicle according to any one of claims 1-4, wherein the AGV cantilever vehicle further comprises:
a moving member, wherein the moving member surrounds a portion of the cantilever shaft and is slidably connected to the cantilever shaft;
two clamping jaws located on one side of the moving member away from the adjusting plate; the two clamping jaws are respectively arranged on both sides of the cantilever shaft and connected to the moving member respectively, so that the clamping jaws can rotate in a direction away from or towards the cantilever shaft;
a first driving mechanism arranged on a surface of the moving member away from the adjusting plate, and configured to drive the clamping jaws to rotate in the direction away from or towards the cantilever shaft.

10. The AGV cantilever vehicle according to claim 9, wherein the moving member comprises: a moving rack, two moving gears, a moving motor, a moving guide rail, and a moving slider;
wherein the moving rack extends along the axial direction of the cantilever shaft and is installed on an outer circumferential surface of the cantilever shaft;
one of the two moving gears is installed in mesh with the moving rack, and the moving motor is installed on the moving member and fixedly connected to the other one of the two moving gears;
the moving guide rail extends along the axial direction of the cantilever shaft and is fixedly mounted on the outer circumferential surface of the cantilever shaft, and the moving guide rail is partially located between the moving member and the cantilever shaft;
the moving slider is slidably installed with the moving guide rail and is fixedly connected to the moving member.

11. The AGV cantilever vehicle according to claim 9, wherein the first driving mechanism comprises:
a fixed block comprising a guide rail part and a fixed part; wherein the guide rail part is located on the surface of the moving member away from the adjusting plate, and extends radially along the cantilever shaft; the fixed part is arranged on a surface of the guide rail part close to the cantilever shaft, and is located between the two clamping jaws, the fixed part is hinged to the clamping jaws so that the clamping jaws can rotate in the direction away from or towards the cantilever shaft;
a slider slidably connected with the guide rail part;
two second connecting rods respectively arranged on both sides of the fixed block along a direction perpendicular to an extension of the guide rail part; wherein one end of each second connecting rod is hinged to the slider, and the other end of the second connecting rod is hinged to a clamping jaw located on a same side of the fixed block;
a third driving component arranged on the moving member and configured to drive the slider to slide radially along the cantilever shaft.

12. The AGV cantilever vehicle according to claim 11, wherein the third driving component comprises a clamping rack, a clamping gear, a clamping motor, and an electric cylinder;
an extension direction of the clamping rack is the same as that of the guide rail part, and the clamping rack is fixedly connected to the slider;
the clamping gear is installed in mesh with the clamping rack;
the clamping motor is installed on the moving member and fixedly connected to the clamping gear;
the electric cylinder is installed on the moving member and fixedly connected to the slider.

13. The AGV cantilever vehicle according to claim 12, wherein the AGV cantilever vehicle further comprises:
a material pushing block fixedly mounted on the clamping jaw, with one end of the material pushing block away from the clamping jaw being farthest from the moving member;
wherein a material of the material pushing block comprises an elastic material.

14. The AGV cantilever vehicle according to any one of claims 1-4, wherein the AGV cantilever vehicle further comprises:
a material retaining plate located on one side of the cantilever shaft away from the adjusting plate, the material retaining plate rotates around a second axis to extend beyond or retract into an outer circumferential surface of the cantilever shaft;
wherein the second axis is parallel to and spaced apart from an axis of the cantilever shaft.

15. The AGV cantilever vehicle according to any one of claims 1-4, wherein the AGV cantilever vehicle further comprises a material retaining motor and optical sensors;
the material retaining motor is located within the first through-hole and fixedly mounted on the cantilever shaft; the material retaining motor is used to drive the material retaining plate to rotate along the second axis;
the optical sensors are connected to the material retaining motor for detecting a position of the material retaining plate, and there are two optical sensors.

16. The AGV cantilever vehicle according to any one of claims 1-4, wherein the AGV cantilever vehicle further comprises multiple roller bearings;
the multiple roller bearings are installed on an outer wall of the cantilever shaft and partially protrude from the outer wall of the cantilever shaft, with axes of the roller bearings being perpendicular to the axis of the cantilever shaft;
the multiple roller bearings are spaced apart along the axial direction of the cantilever shaft and evenly distributed circumferentially around the cantilever shaft.
